# DEMANDE DE BREVET EUROPEEN

(11) **EP 1 048 529 A1**
(43) Date de publication de la demande: **02.11.2000**
(21) Numéro de dépôt: 00401180.5
(22) Date de dépôt: 28.04.2000
(51) Int. Cl.: B60R 16/02

(54) **Joint d'étanchéité pour une traversée de paroi et assemblage obtenu avec ce joint**

(30) Priorité: 30.04.1999 FR 9905516
(71) Demandeur: Renault, 92100 Boulogne Billancourt (FR)
(72) Inventeur: Hiron, Christian, 75014 Paris (FR)

(57) **Abrégé**

Joint d'étanchéité pour une traversée de paroi (1) comprenant une ouverture dans laquelle est montée de façon étanche un manchon (2) en matériau élastique destiné à recevoir un faisceau (4) de fils ou un câble et apte à être monté dans l'ouverture de la paroi, caractérisé en ce que le manchon (2) comporte un partie tubulaire (22) de la surface extérieure de laquelle font saillie deux rebords annulaires (231, 232) venant s'appuyer contre les faces de la paroi lorsque le manchon est monté dans l'ouverture et en ce que les extrémités du manchon présentent une conformation autorisant un enroulement du manchon sur lui-même pour assurer l'étanchéité entre le manchon et le faisceau.

## Description

La présente invention a pour objet un joint d'étanchéité pour une traversée de paroi.

Elle vise également un assemblage obtenu avec ce joint.

Parmi les faisceaux électriques d'un véhicule automobile, certains servent à faire transiter des informations de part et d'autre d'une paroi, par exemple le tablier qui sépare l'habitacle du compartiment moteur; pour assurer une étanchéité au niveau de l'ouverture de passage du faisceau électrique, il est connu par la publication US-5.608.191 d'injecter un matériau d'enrobage entre les différents fils du faisceau de manière à incorporer localement le faisceau dans une gangue élastique ; la gangue est ensuite clippée dans l'ouverture de la paroi.

Une telle solution reste cependant onéreuse car elle nécessite une opération d'injection préalable de la gangue.

En outre, il est ensuite difficile de séparer les différents fils du faisceau liés par la gangue lors des opérations de recyclage, par exemple, en fin de vie du véhicule.

Il est classiquement connu dans des applications électrotechniques d'utiliser un presse-étoupe lorsqu'un câble doit traverser une paroi et que l'on veut obtenir une étanchéité entre les deux côtés de la paroi au niveau de l'orifice de passage du câble, un maintien du câble par rapport à une sollicitation en traction et éviter que le câble ne soit endommagé par le bord de l'orifice de passage du câble pratiqué dans la paroi ; pour ce faire, un presse-étoupe généralement utilisé, bien que fiable et efficace, comprend néanmoins plusieurs éléments distincts.

Le joint selon la présente invention permet de remplacer ce presse-étoupe à moindre prix tout en facilitant l'opération de montage dans l'orifice de la paroi.

Aussi pour remédier à ces inconvénients, la présente invention propose un joint d'étanchéité assurant non seulement une bonne étanchéité lors de la traversée de la paroi mais également de permettre une désolidarisation aisée du faisceau ou du câble de la paroi.

A cet effet, l'invention a pour objet un joint d'étanchéité pour une traversée de paroi comprenant une ouverture dans laquelle est montée de façon étanche un manchon en matériau élastique destiné à recevoir un faisceau de fils ou un câble et apte à être monté dans l'ouverture de la paroi, caractérisé en ce que le manchon comporte une partie tubulaire de la surface extérieure de laquelle font saillie deux rebords annulaires venant s'appuyer contre les faces de la paroi lorsque le manchon est monté dans l'ouverture et en ce que les extrémités du manchon présentent une conformation autorisant un enroulement du manchon sur lui-même pour assurer l'étanchéité entre le manchon et le faisceau.

Selon une autre caractéristique de l'invention, la partie tubulaire du joint d'étanchéité présente une conformation conique.

Selon une autre caractéristique de l'invention, le maintien des extrémités du manchon en position d'étanchéité est assuré par collage desdites extrémités sur la surface extérieure du faisceau de fils ou du câble.

Selon une autre caractéristique de l'invention, le maintien des extrémités du manchon en position d'étanchéité est assuré par un collier de serrage.

Selon une autre caractéristique de l'invention, le collier présente une section triangulaire.

Selon une autre caractéristique de l'invention, le maintien des extrémités du manchon en position d'étanchéité est assuré par collage ou soudage desdites extrémités sur la surface extérieure du faisceau de fils ou du câble.

La présente invention concerne aussi un assemblage constitué par une paroi traversée par un faisceau de fils ou un câble et obtenu avec le joint d'étanchéité précédemment détaillé.

D'autres caractéristiques et avantages de l'invention apparaîtront mieux à la lecture de la description qui va suivre et en se référant aux figures annexées dans lesquelles :

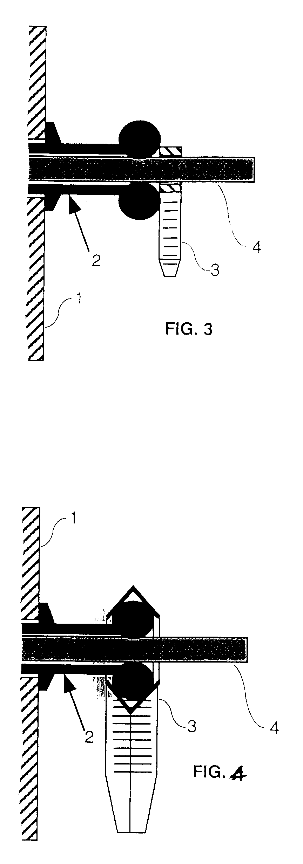

- les figures 1, 2 et 3 illustrent, en coupe axiale, les différentes étapes de montage en position étanche sur une paroi du joint d'étanchéité selon l'invention.
- la figure 4 illustre, en coupe axiale, un autre mode de réalisation d'un joint d'étanchéité selon la présente invention.

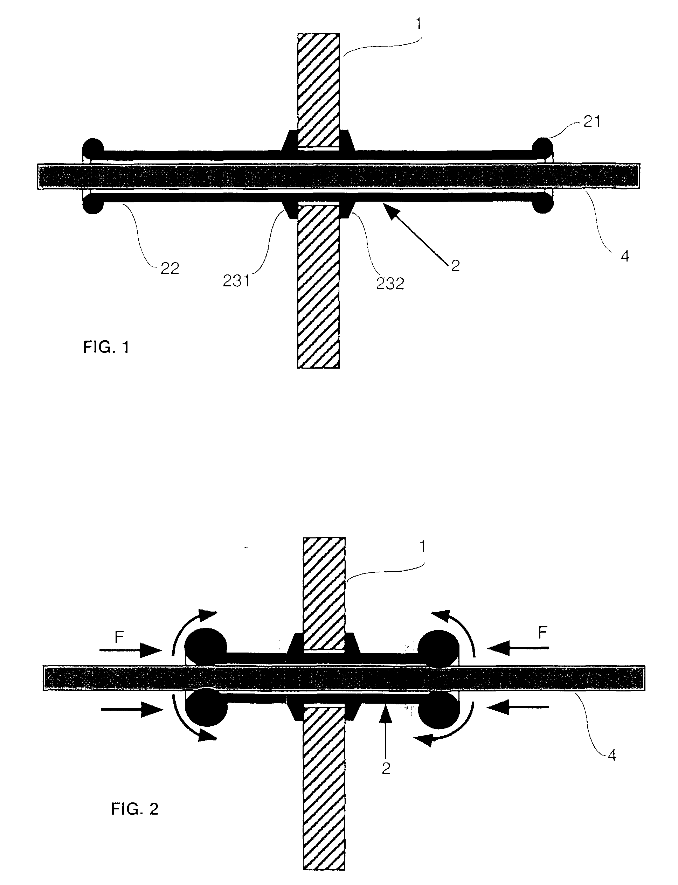

En se reportant à la figure 1, on voit un faisceau 4 de fils électriques ou un câble traversant de façon non étanche une paroi 1, par exemple le tablier avant d'un véhicule automobile.

La paroi 1 est pourvue d'une ouverture dans laquelle est monté de façon non étanche un manchon 2 destiné à recevoir le faisceau 4 de fils. Le manchon 2 est réalisé en un matériau élastique.

Le manchon 2 comprend une partie tubulaire 22 dont les extrémités 21 sont conformées en un tore.

Le manchon comporte deux rebords (231, 232) s'étendant radialement vers l'extérieur du manchon ; le premier rebord annulaire 231 vient pincer l'une des faces de la paroi et le second rebord 232, la face opposée lorsque le manchon est monté dans l'ouverture de la paroi.

La suite de la description expliquera brièvement le montage du joint d'étanchéité sur la paroi.

On monte tout d'abord le manchon 2 dans l'ouverture de la paroi. Puis, on glisse le faisceau 4 dans le canal central du manchon jusqu'à ce qu'il soit traversé de part en part. Le diamètre du canal central est choisi suffisamment grand par rapport au diamètre extérieur du faisceau de façon que le faisceau reste libre pendant toute l'opération de montage et de connexion du faisceau.

Dès que ces opérations sont terminées, les extrémités 21 en forme de tore du manchon sont repoussées en direction de la paroi (action symbolisée par la flèche F), ce qui provoque un enroulement des extrémités du manchon et un resserrement de ces derniers sur le faisceau. On obtient ainsi deux joints toriques dont la pression ou le diamètre intérieur peuvent être adaptables dans la limite des dimensions de l'ensemble manchon + faisceau et de la différence entre les deux diamètres.

Une fois une étanchéité satisfaisante obtenue, chaque extrémité du manchon est maintenue en position par un collier fixé sur le faisceau ; ce collier 3 empêche notamment que les vibrations ne provoquent le déroulement des extrémités du manchon.

On peut aussi utiliser un collier 3 de section triangulaire qui est serré directement sur les tores, ce qui compense les relaxations du caoutchouc et permet de maintenir une pression constante sur le faisceau dans le temps.

Bien entendu, l'invention n'est nullement limitée au mode de réalisation décrit et illustré qui n'a été donné qu'à titre d'exemple.

C'est ainsi que la forme cylindrique du manchon peut être remplacée par une forme conique.

En outre, le blocage en position des extrémités du manchon peut être obtenu par autre chose qu'un collier, par exemple par collage ou chauffage.

C'est dire que l'invention comprend tous les équivalents techniques des moyens décrits ainsi que leurs combinaisons si celles-ci entrent dans le cadre des revendications qui suivent.

## Revendications

1. Joint d'étanchéité pour une traversée de paroi (1) comprenant une ouverture dans laquelle est montée de façon étanche un manchon (2) en matériau élastique destiné à recevoir un faisceau (4) de fils ou un câble et apte à être monté dans l'ouverture de la paroi, caractérisé en ce que le manchon (2) comporte un partie tubulaire (22) de la surface extérieure de laquelle font saillie deux rebords annulaires (231 , 232) venant s'appuyer contre les faces de la paroi lorsque le manchon est monté dans l'ouverture et en ce que les extrémités du manchon présentent une conformation autorisant un enroulement du manchon sur lui-même pour assurer l'étanchéité entre le manchon et le faisceau.

2. Joint d'étanchéité selon la revendication 1, caractérisé en ce que la partie tubulaire (22) présente une conformation conique.

3. Joint d'étanchéité selon la revendication 1 ou 2, caractérisé en ce que le maintien des extrémités du manchon (2) en position d'étanchéité est assuré par collage desdites extrémités sur la surface extérieure du faisceau (4) de fils ou du câble.

4. Joint d'étanchéité selon la revendication 1 ou 2, caractérisé en ce que le maintien des extrémités du manchon (2) en position d'étanchéité est assuré par un collier de serrage (3).

5. Joint d'étanchéité selon la revendication 3, caractérisé en ce que le collier (3) présente une section triangulaire.

6. Joint d'étanchéité selon la revendication 1 ou 2, caractérisé en ce que le maintien des extrémités du manchon (2) en position d'étanchéité est assuré par collage ou soudage desdites extrémités sur la surface extérieure du faisceau (4) de fils ou du câble.

7. Assemblage constitué par un faisceau (4) de fils ou un câble et obtenu avec le joint d'étanchéité selon l'une des revendications précédentes.
